# EUROPEAN PATENT SPECIFICATION

(11) **EP 2 673 704 B1**
(45) Date of publication and mention of the grant of the patent: **23.10.2019**
(21) Application number: 11863212.4
(22) Date of filing: 07.04.2011
(51) Int. Cl.: G06F 9/455, G06F 9/48

(54) **METHOD AND APPARATUS FOR MOVING A SOFTWARE OBJECT**
VERFAHREN UND VORRICHTUNG ZUM BEWEGEN EINES SOFTWAREOBJEKTS
PROCÉDÉ ET APPAREIL POUR DÉPLACER UN OBJET LOGICIEL

(43) Date of publication of application: 18.12.2013
(73) Proprietor: Ent. Services Development Corporation LP, Houston, TX 77070 (US)
(72) Inventor: STUEMPFLE, Matthew A., Raleigh, North Carolina 27607 (US); GIBSON, Jonathan David, Austin, Texas 78728 (US)
(74) Representative: EIP
(86) International application number: PCT/US2011/031523
(87) International publication number: WO 2012/138339

(56) References cited:
- US-A1- 2008 046 960
- US-A1- 2009 070 771
- US-A1- 2009 150 529
- US-A1- 2009 228 589
- US-A1- 2010 262 974
- US-B1- 7 506 037

## Description

### BACKGROUND

Many organizations and enterprises are making ever increasing use of data centers and server virtualization technology to run their information technology (IT) applications in so-called virtualized environments. To help manage the IT applications within a data center there exist numerous virtualization tools, such as Hewlett-Packard's Matrix Operating Environment (Matrix OE), that automatically manage application deployment and redeployment within virtualized environments. Such virtualization tools enable the efficient management of data centers by enabling IT applications and virtual machines (VM) on which the IT applications run to be dynamically moved to different physical machines (PM) in the data center, whilst the applications and virtual machines are running.

The redeployment of software applications and virtual machines to different physical machines in a data center may be based on various characteristics of the physical machines. For instance, a virtualization tool may decide to move a virtual machine to a different physical machine based on characteristics of the physical machine such as available memory, memory utilization, processing power, processor utilization, processor temperature, and so on. Accordingly, a physical machine with low processor utilization may, for example be shut down, thereby saving energy, and any virtual machines deployed thereon moved to another physical machine. Conversely, a physical machine with high processor utilization may be relieved of an application or virtual machine deployed thereon, by moving some of the virtual machines to another physical machine within the virtualized environment. For example, US patent no. US 7,506,037 describes a migration advisor module configured to receive information regarding a request to migrate a virtual environment from a first host to a second host. The migration advisor module can determine whether the virtual environment is compatible with the second host by comparing available physical system resources of the second host with physical system requirements of the virtual environment. US 2008/046960 A1 describes that, when a determination is made that a component in a data processing system has failed to meet processing requirements and a candidate host to where the component may be migrated based on performance considerations is identified, a first security policy associated with the component is compared to a second security policy associated with the candidate host to determine if the first security policy is equivalent to or stronger than the second security policy.

### BRIEF DESCRIPTION

Examples and embodiments of the invention will now be described, by way of non-limiting example only, with reference to the accompanying drawings, in which:
Figure 1 is a simplified block diagram illustrating a system according to an example of the present invention;
Figure 2 is a simplified flow diagram outlining an example method of operating elements of the system of Figure 1;
Figure 3 is a simplified flow diagram outlining an example method of operating elements of the system of Figure 1;
Figure 4 is a simplified flow diagram outlining an example method of operating elements of the system of Figure 1;
Figure 5 is a simplified block diagram illustrating a virtualization management system according to an example of the present invention;
Figure 6 is a simplified block diagram illustrating an implementation of a virtualization management system according to an example of the present invention; and
Figure 7 is a simplified flow diagram outlining an example method of operating a virtualization management system according to an example of the present invention.

### DETAILED DESCRIPTION

Current virtualization management tools deploy and redeploy software applications and virtual machines based solely on characteristics of the virtual or physical machines on which the applications are deployed.

However, examples of the present invention aim to provide increased control over how software applications and virtual machines are redeployed or moved in a virtualized environment.

For example, the operation of certain types of software application or the processing of certain types of data may be subject to business constraints, regulatory constraints, legal constraints, security constraints, or the like. Such constraints may, for example, prohibit one software application from being deployed on the same virtual machine, or on the same physical machine, as another software application or type of software application, or on a virtual or physical machine having certain other characteristics.

For example, a software application that processes personal medical data may be constrained from running on a virtual or physical machine that is connected to a public network, such as the Internet, in order to avoid potential security risks. Similarly, a software application processing personally identifiable information (PII) may be constrained to being deployed on the same physical machine as a database server on which the Pll data is stored. Likewise, a software application that complies with the payment card industry data security standards (PCI-DSS) data may have to comply with specific industry regulations.

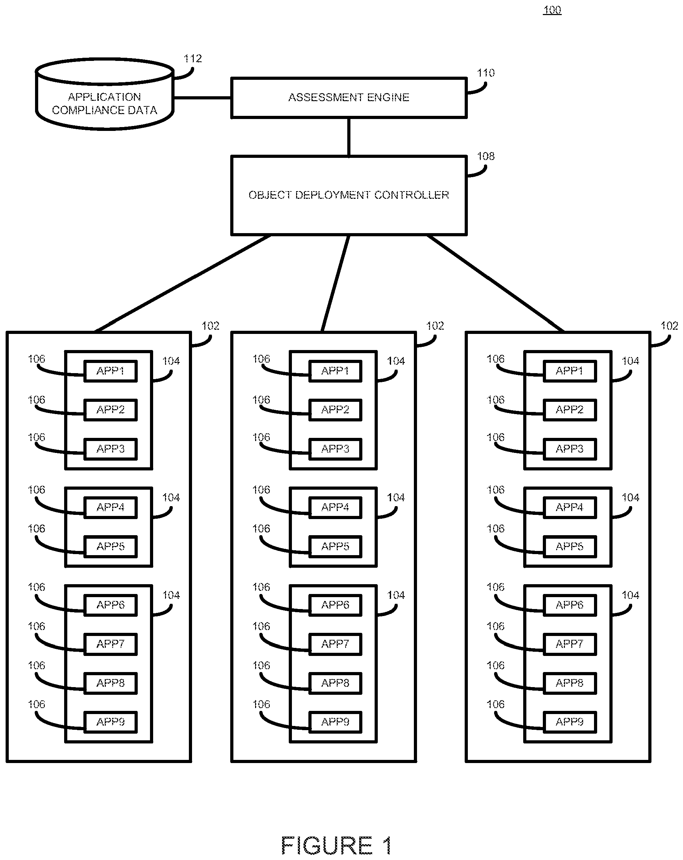

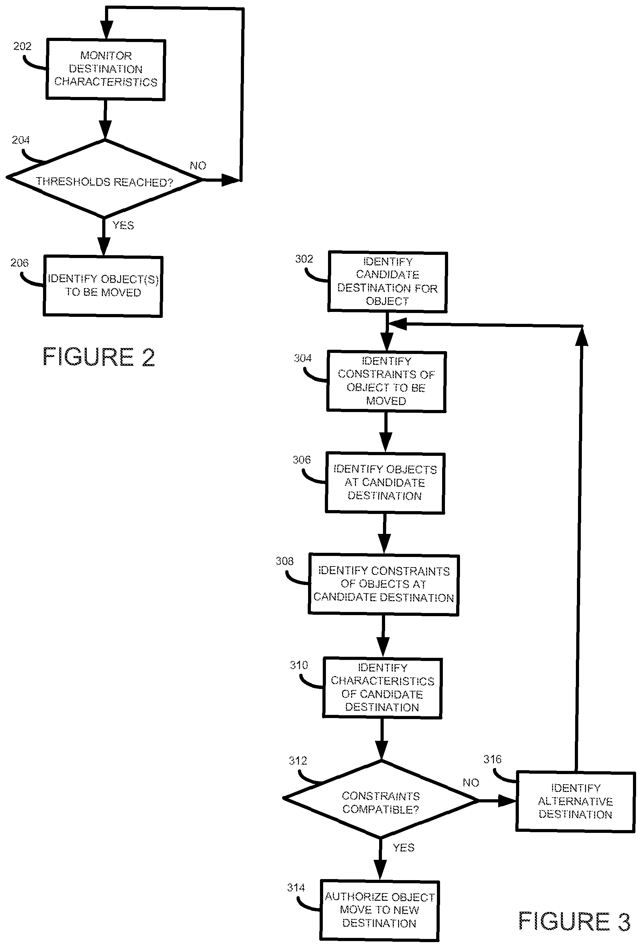

Referring now to Figure 1 there is shown a block diagram illustrating a virtualization management system 100 according to an example of the present invention. The operation of elements of Figure 1 is described in further detail with additional reference to Figure 2.

The system 100 comprises a number of software objects 106, such as software applications and computer programs, each of which is deployed on a virtual destination 104 such as a virtual machine or other software object execution environment. Each virtual destination 104 is in turn deployed on a hardware destination 102, such as a physical computing device, computer server or other processing device.

In one example, a virtual destination 104 may be deployed on a further virtual destination 104, which is in turn deployed on a hardware destination 102.

Since both software applications 106 and virtual destinations 104 are both kinds of software objects, the term software object may be used herein to cover both software applications 106 and virtual destinations 104.

The identification of which deployed software objects (104 and 106) are to be moved is performed by an object deployment controller 108. In one example the object deployment controller 108 may be a virtualization controller, such as a HP Matrix Operating Environment (OE) for HP-UX systems, provided by Hewlett-Packard Company. The object deployment controller 108 generates notifications, alerts, messages, or the like, that indicate to an assessment engine or module 110 the identified object to be moved. The assessment engine 110 then, as described further below, determines where the identified object is to be moved.

Referring now to Figure 2, operation of the object deployment controller 108 according to an example of the present invention is described. At 202 the object deployment controller 108 monitors characteristics of the object destinations. The obtained monitored characteristics may be stored in a suitable memory or data store (not shown).

In one example, the object deployment controller 108 monitors (202) characteristics of a hardware destination 102 on which a software object is deployed. In a further example, the object deployment controller 108 monitors (202) characteristics of a virtual destination 104 on which a software object is deployed. In a yet further example, the object deployment controller 108 monitors (202) characteristics of both a hardware and a virtual destination on which a software object is deployed.

For a hardware destination 102 the monitored characteristics may include, for example, technical characteristics of the hardware destination 102 such as the available memory, memory utilization level, available processing power, processor utilization level, available storage capacity, storage utilization level, and the like. For a virtual destination 104 the characteristics may include available virtual memory, virtual memory utilization, virtual processing power available, virtual processor utilization level, and the like.

In one example details of the monitored characteristics may be obtained directly from the destinations, for example, using a suitable interface. In a further example, details of the monitored characteristics may be obtained from a centralized data repository (not shown), such as a configuration management database (CMDB).

Using the monitored characteristics the object deployment controller 108 determines (204) whether any of the monitored characteristics exceeds or falls below a predetermined threshold level. For example, if the processor utilization of a hardware destination exceeds an average of 70% over a period of 10 minutes, the object deployment controller 108 may determine to move one or more software objects to a different virtual or hardware destination. In other examples other thresholds and characteristics may be used.

At 206 the object deployment controller 108 identifies one or more software objects that are to be moved to a new destination. In one example, the object deployment controller 108 identifies one or several software objects deployed in a virtual destination 104 that are to be moved to a different virtual destination 104 on the same or a different hardware destination 102. In another example, the object deployment controller 108 identifies one or several virtual destinations 104 (and all of the software objects deployed thereon) to be moved to a different hardware destination 102.

The assessment engine 110 is used, once the object deployment controller 108 determines that a software object is to be moved, to determine a new destination for that software object. Operation of the assessment engine 110 according to an example of the present invention will now be described with additional reference to Figure 3.

At 302 the assessment engine 110 identifies a new candidate, or new potential, destination for the identified software object to be moved. In one example the identification of a new candidate destination is determined by finding a destination in which the obtained monitored characteristics indicate that the software object may be moved to the new destination without causing any adverse consequences in the virtualized environment. For example, an adverse consequence may be, for example, causing a characteristic of a virtual or physical destination to exceed or drop below a predetermined level. For example, if the identified software object is known to require at least 4Gb of memory, then a candidate destination having at least 4Gb of available memory may be chosen. Other requirements of the software object, such as storage requirements, processing requirements, network requirements, and the like, may also be considered if appropriate.

In one example, the assessment engine identifies a candidate destination by interrogating the object deployment controller via a suitable interface, such as an application programming interface.

At 304 the assessment engine 110 identifies constraint data that identifies one or more constraints associated with the identified software object to be moved. The constraint data is stored in an object compliance data store or memory 112. The constraint data may, for example, be defined by the IT system operator, be defined by a customer on behalf of whom an object is deployed, or be obtained in any other appropriate manner. As previously described, the constraint data may define business constraints, regulatory constraints, legal constraints, security constraints, or the like. The constraint data may define technical and/or non-technical constraints.

At 306 the assessment engine 110 identifies any software objects at the candidate destination, and at 308 identifies, using the object compliance data store 112, constraints associated with each of the software objects identified at the candidate destination.

At 310 the assessment engine 110 identifies characteristics of the candidate destination. The characteristics identified may, for example, be based on constraints associated with the software object to be moved. For example, if a constraint associated with the software object to be moved is that no public network access be provided on the destination, the assessment engine 110 may identify whether the candidate destination has public network access. In one example the destination characteristics are obtained from the aforementioned data store or memory. In a further embodiment the destination characteristics may be obtained directly from a destination, for example through an appropriate interface or software application.

At 312 the assessment engine 110 determines whether the obtained object constraints and destination characteristics are compatible with one another.

If the assessment engine 110 determines that the constraints and destination characteristics are not compatible the assessment engine 110 identifies (316) an alternative candidate destination.

If, on the other hand, the assessment engine 110 determines that the constraints and destination characteristics are compatible the assessment engine 110 authorizes the object to be moved to the candidate destination.

In one example the authorization to move the object to the candidate destination, although with details of the candidate destination, is sent, or is made available to, the object deployment controller 108 which appropriately moves the object.

In a further example, the assessment engine 110 performs the move of the object to the candidate destination in an appropriate manner.

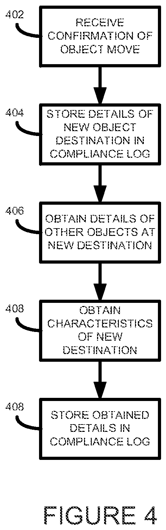

In a further example, described with additional reference to Figure 4, the assessment engine 110 receives (402) confirmation that the object to be moved was moved, and additionally receives details of the object destination to which it was moved. At 404 the assessment engine 110 stores these details in a compliance log (not shown). The compliance log may, for example, be stored in any suitable memory or data store.

At 406 the assessment engine 110 obtains details of other objects at the new destination. In one example, this may include details of other objects in at least one of a virtual destination and a hardware destination. The obtained details may, for example, include details of the type of each object. At 408 the assessment engine 110 obtains characteristics of the new destination. The obtained characteristics may, for example, include a destination identifier enabling the destination, such as a hardware destination, to be uniquely identified. In other examples, the obtained characteristics may include, for example, details of the network access available to the device, details of security settings, and so on.

At 408 the assessment engine 110 stores the obtained details in the compliance log.

Storing such details in the compliance log enables an effective audit of the destinations of individual software objects to be carried out. If subsequently required the data stored in the log can be used to show which software objects were deployed on which destinations and with which other software objects at any given time.

It is important to note, however, that typical object deployment management systems do not maintain such a log since, where compliance with object constraints is not required, there is no reason to maintain such a log.

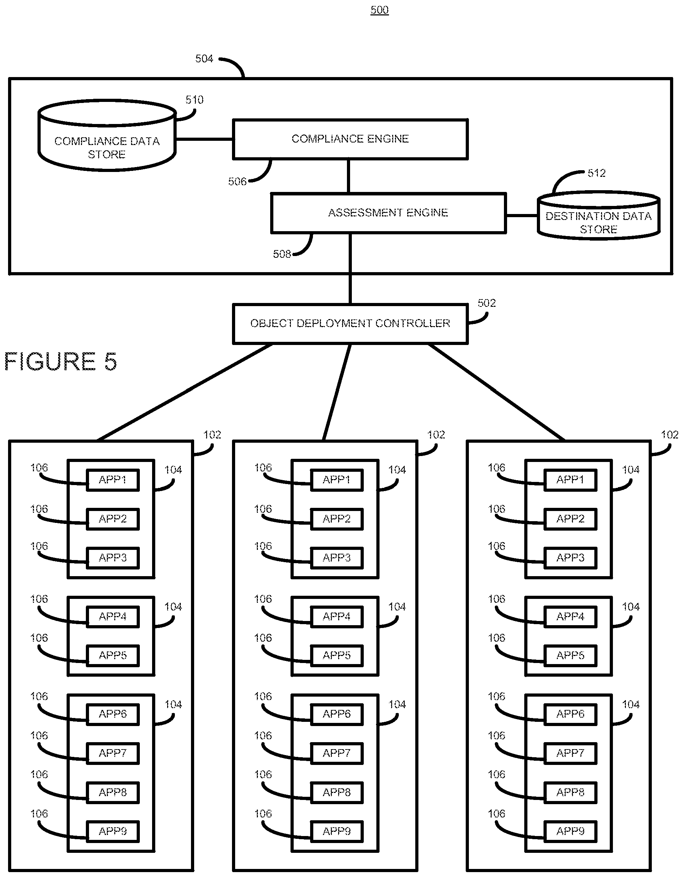

An example of a virtualization management system 504 according to an example of the present invention will now be described, in greater detail, with reference to Figure 5. The virtualization management system 504 includes a compliance engine 506, an assessment engine 508, a compliance data store 510, and a destination data store 512.

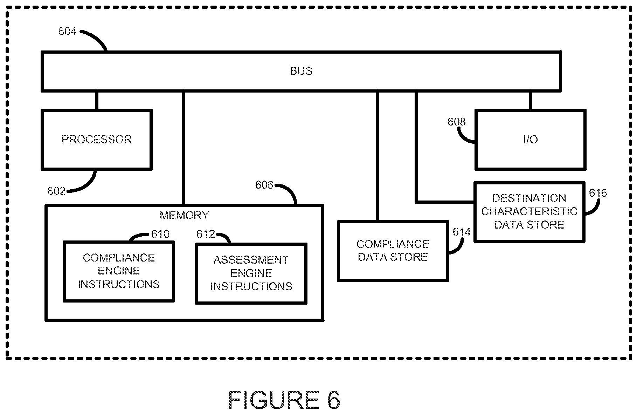

In a further example, as illustrated in Figure 6, at least part of the system 504, may be implemented using a microprocessor 602 coupled, via a communication bus 604, to a memory 606, an input/output module 608, and storage 614 and 616. The memory 606 stores compliance engine instructions 610 and assessment engine instructions 612. The instructions 610 and 612 are processor understandable instructions that when executed by the processor 602 provide functionality of a virtualization management system comprising a compliance engine and an assessment engine as described herein.

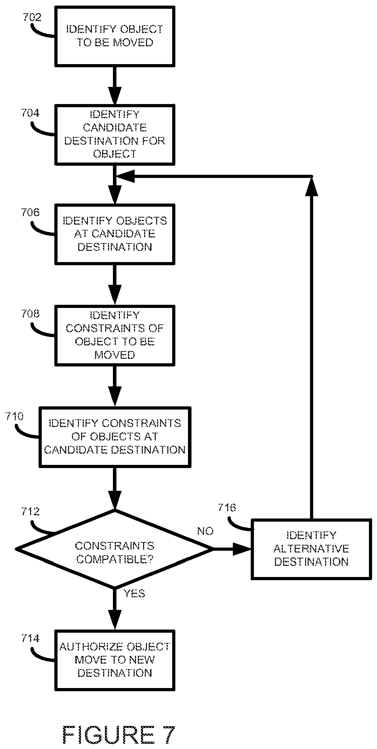

Operation of the virtualization management system 504 will be further described with additional reference to the Figure 7.

At 702 the virtualization management system 504 identifies that a software object (106 or 104) is to be moved to a new destination.

In one example, the virtualization management system 504 identifies that an object is to be moved by receiving a notification or alert from an object deployment controller 502.

In a further example, the virtualization management system 504 identifies that an object is to be moved by interrogating the object deployment controller 502, for example, through a suitable interface, for example using a suitable application programming interface (API) (not shown).

In a further example, the virtualization management system 504 identifies that an object is to be moved by intercepting messages sent by the object deployment controller 502.

In a yet further example, the object deployment controller 502 is an integrated part of the virtualization management system 504.

At 704 the virtualization management system 504 identifies a candidate destination to which the object could be moved to.

In one example, the assessment engine 508 identifies a candidate destination by receiving, or obtaining, a candidate destination from the object deployment controller 502.

In a further example, the assessment engine 508 identifies a candidate destination by identifying the technical requirements of the object to be moved, and identifying a destination that meets those technical requirements. For example, the technical characteristics of each available destination in the system 500 may be available from a destination characteristic data store 512. In one example the data store 512 may be a configuration management database. The technical requirements of the object to be moved may, for example, be obtained by accessing CMDBs, application programming interfaces (APIs), or the like.

Table 1 below shows example characteristics of a hardware destination which may include, for example, hardware type, a destination identifier, and other technical characteristics.

**Table 1 - Example Physical Machine Characteristics**

| HARDWARE DESTINATION CHARACTERISTICS | |
|---|---|
| CHARACTERISTIC | VALUE |
| Hardware Type: | HP-UX Server |
| Destination Identifier: | Server01 |
| Total Memory Available: | 10Gb |
| Current available memory: | 2Gb |
| Processing Power | 5 CPUs allocated |
| Public Network Access? | No |
| ... | ... |

Table 2 below shows example characteristics of a virtual destination which may include, for example, a virtual destination identifier and other virtual destination technical requirements.

**Table 2 - Example Virtual Machine Characteristics**

| VIRTUAL MACHINE CHARACTERISTICS | |
|---|---|
| CHARACTERISTIC | VALUE |
| Destination Type: | Virtual Machine |
| Destination Identifier: | VirtualMachine01 |
| Total Virtual Memory Allocated: | 5Gb |
| Available Virtual memory: | 2Gb |
| Public Network Access? | No |
| ... | ... |

Table 3 below shows example application or object requirements which may include, for example, object type (e.g. application, virtual machine, etc.), object purpose, and object technical requirements.

**Table 3 - Example Software Application Requirements**

| OBJECT REQUIREMENTS | |
|---|---|
| CHARACTERISTIC | VALVE |
| Object Identifier: | Application1 |
| Object Type: | Application |
| Object Purpose | Financial transaction processor |
| Minimum memory requirements: | 4Gb |
| Minimum storage requirements | 20Gb |
| Object Footprint | 30Gb |
| Public Network Access Required? | No |
| ... | ... |

At 706 the assessment engine 508 identifies any objects at the identified candidate destination. The objects identified may include both applications and virtual machines. In one example the objects may be identified through interrogation of the data store 512.

At 708 the compliance engine 506 identifies constraints associated with the object to be moved and, at 710, identifies constraints associated with the objects at the candidate destination. Example object constraint data is shown below in Table 4. The object constraint data may include, for example, details of the object purpose, data types processed, data types with which the object is deemed incompatible, etc. The constraint data may, for example, be obtained from the compliance data store 510. In a further example the constraint data may be obtained directly from the objects concerned, for example through use of an appropriate interface or messaging mechanism.

**Table 4 - Example Object Constraint Data**

| OBJECT CONSTRAINT DATA | |
|---|---|
| CHARACTERISTIC | VALUE |
| Object Identifier: | Application 1 |
| Object Type: | Application |
| Object Purpose | Financial transaction processor |
| Data types processed: | PCI-DSS Personally Identifiable Data (PII) |
| ... | ... |

At 712 the compliance engine 506 determines whether the constraints of the object to be moved and any objects on the candidate destination are compatible with one another. To assist in this, the compliance engine 506 additionally obtains, from the compliance data store 510 details of data type constraints for each data type associated with each of the objects. An example of data type constraint data is shown below in Table 5.

**Table 5 - Example Data Type Constraints**

| DATA TYPE CONSTRAINTS | |
|---|---|
| CHARACTERISTICS | COMMENTS |
| Data Type: | PCI-DSS |
| Incompatible data types: | Corporate Financial data |
| Deployment possible on destination with public network access? | No |
| Exceptions permitted: | None |
| ... | ... |

The data type constraint data defines, for each data type, details of other data types the processing of which is incompatible therewith. The data type constraints may also, if appropriate, positively identify other data types which are deemed compatible data types. The data type constraint data may also define, for example, additional constraints that apply to a particular data type, for example, as to whether the data can be processed on a destination having public Internet access, whether any exceptions or derogations to the constraints are permissible (and under what conditions), etc.

If the compliance engine 506 determines that the constraints are compatible with each other it authorizes (714) the object to be moved to the candidate destination, otherwise (716) the compliance engine 506 instructs the assessment engine 508 to determine an alternative candidate destination.

In the example where the object deployment controller 502 is external to the virtualization management system 504 an authorization or a request to move the object to the candidate destination may be sent to the object deployment controller 502. In the example where the object deployment controller 502 is integral to the virtualization management system 504 the compliance engine 506 or assessment engine 508 may directly instruct the object deployment controller 502 to move the object to the candidate destination.

Details of any successful and unsuccessful object moves may, in one example, be stored in a log (not shown) for subsequent auditing purposes.

As described above, it will be appreciated that examples and embodiments of the present invention can be realized in the form of hardware, software or a combination of hardware and software. As described above, any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are examples of machine-readable storage that are suitable for storing a program or programs that, when executed, implement examples of the present invention. Examples of the present invention may be conveyed electronically via any medium such as a communication signal carried over a wired or wireless connection and examples suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of moving one of a plurality of software objects deployed among a plurality of object destinations in a computing system,
the method comprising:
identifying a deployed software object to be moved to a new object destination;
identifying a candidate object destination;
identifying other software objects deployed on the candidate object destination;
identifying a constraint associated with the software object to be moved, the identifying the constraint associated with the software object to be moved including identifying a data type constraint for the software object;
identifying a constraint associated with the other software objects deployed on the candidate object destination, the identifying the constraint associated with the other software objects deployed on the candidate object destination including identifying a respective data type constraint for each of the other software objects deployed on the candidate object destination;
determining whether the constraint associated with the software object to be moved is compatible with the constraint associated with the other software objects deployed on the candidate object destination, the determining including determining whether the data type constraint for the software object is compatible with the respective data type constraint for each of the other software objects deployed on the candidate object destination; and
authorizing the move of the software object to be moved where it is determined that the constraint associated with the software object to be moved is compatible with the constraint associated with the other software objects deployed on the candidate object destination.

2. The method of claim 1, wherein at least one of the software object to be moved or the other software objects deployed on the candidate object destination is one of a software application and a virtual machine.

3. The method of claim 1, wherein the computing system comprises a plurality of physical computing devices, and further wherein an object destination of the plurality of object destinations is one of a virtual machine and a physical computing device of the plurality of physical computing devices.

4. The method of claim 3, wherein where the software object to be moved is a virtual machine, the step of authorizing the move further comprises authorizing the move of the virtual machine and all objects deployed thereon to the candidate object destination.

5. The method of claim 1, wherein the step of identifying the candidate object destination is based on characteristics of the software object to be moved and object destination characteristics.

6. The method of claim 1, further comprising moving the software object to be moved to the candidate object destination.

7. The method of claim 6, further comprising, recording details of the software object to be moved, recording details of the new object destination to which the software object to be moved was moved, and recording details of other software objects on the new object destination, in a log.

8. Apparatus for moving one of a plurality of software objects deployed among a plurality of object destinations in a computing system, the apparatus comprising:
a processor; and
a memory, wherein the memory comprises:
assessment engine instructions configured to, when processed by the processor, implement an assessment engine, the assessment engine configured to:
obtain an indication that a software object deployed on an object destination of the plurality of object destinations is to be moved to a different object destination of the plurality of object destinations; and
identify a potential object destination for the software object to be moved to; and
compliance engine instructions configured to, when processed by the processor, implement a compliance engine, the compliance engine configured to:
obtain, from a compliance data store, constraint data associated with the software object, the constraint data including data type constraint data;
obtain, from the compliance data store, constraint data associated with other software objects deployed on the potential object destination, the constraint data including data type constraint data;
determine whether the constraint data associated with the software object is compatible with the constraint data associated with the other software objects, including determining whether the data type constraint data associated with the software object is compatible with the data type constraint data associated with the other software objects; and
where so determined, authorize the software object to be moved.

9. The apparatus of claim 8, wherein the software objects include at least one of a software application and a virtual machine, and wherein the potential object destination is one of a virtual machine and a physical computing device.

10. The apparatus of claim 9, wherein the assessment engine is configured to identify the potential object destination based in part on characteristics of the software object to be moved and characteristics of object destinations of the plurality of object destinations, the characteristics being obtained from a configuration management database, CMDB.

11. The apparatus of claim 9, further comprising an object deployment controller, and wherein the assessment engine is configured to identify the potential object destination directly from the object deployment controller.

12. The apparatus of claim 9, further comprising obtaining the constraint data from a constraint data store.

13. The apparatus of claim 9, further comprising a data log, the assessment engine being configured to store in the data log details of the new object destination to which the software object to be moved was moved and details of other software objects on the new object destination.

14. A tangible, machine-readable medium that stores machine-readable instructions executable by a processor to provide a method of moving one of a plurality of software objects deployed among a plurality of object destinations in a computing system, the tangible machine-readable medium comprising:
machine readable instructions that, when executed by the processor, identify a software object deployed on an object destination to be moved to a new object destination;
machine readable instructions that, when executed by the processor, identify a candidate object destination to which the software object to be moved may be moved;
machine readable instructions that, when executed by the processor, identify software objects currently deployed on the candidate object destination;
machine readable instructions that, when executed by the processor, identify constraint data associated with the software object to be moved, the constraint data including data type constraint data;
machine readable instructions that, when executed by the processor, identify constraint data associated with software objects deployed on the candidate object destination, the constraint data including data type constraint data;
machine readable instructions that, when executed by the processor, determine whether the constraint data associated with the software object to be moved is compatible with the constraint data associated with the software objects deployed on the candidate object destination, including determining whether the data type constraint data associated with the software object to be moved is compatible with the data type constraint data associated with the software objects deployed on the candidate object destination; and
machine readable instructions that, when executed by the processor, authorize the move of the software object to be moved to the candidate object destination where it is determined that the constraint data associated with the software object to be moved is compatible with the constraint data associated with the software objects deployed on the candidate object destination.

15. The tangible, machine-readable medium of claim 14, comprising machine readable instructions that, when executed by the processor, identify the candidate object destination based on characteristics of the software object to be moved and object destination characteristics.

## Patentansprüche

1. Verfahren zum Bewegen eines von mehreren Softwareobjekten, die an mehreren Objektzielen in einem Rechensystem ausgebracht sind, wobei das Verfahren umfasst:
Identifizieren eines ausgebrachten Softwareobjekts, das an ein neues Objektziel zu bewegen ist,
Identifizieren eines Kandidatenobjektziels,
Identifizieren anderer Softwareobjekte, die an dem Kandidatenobjektziel ausgebracht sind,
Identifizieren einer Beschränkung, die mit dem zu bewegenden Softwareobjekt assoziiert ist, wobei das Identifizieren der Beschränkung, die mit dem zu bewegenden Softwareobjekt assoziiert ist, ein Identifizieren einer Datentypbeschränkung für das Softwareobjekt umfasst,
Identifizieren einer Beschränkung, die mit den anderen Softwareobjekten assoziiert ist, die an dem Kandidatenobjektziel ausgebracht sind, wobei das Identifizieren der Beschränkung, die mit den anderen Softwareobjekten assoziiert ist, die an dem Kandidatenobjektziel ausgebracht sind, ein Identifizieren einer jeweiligen Datentypbeschränkung für jedes der anderen Softwareobjekte umfasst, die an dem Kandidatenobjektziel ausgebracht sind,
Bestimmen, ob die Beschränkung, die mit dem zu bewegenden Softwareobjekt assoziiert ist, kompatibel mit der Beschränkung ist, die mit den anderen Softwareobjekten assoziiert ist, die an dem Kandidatenobjektziel ausgebracht sind, wobei das Bestimmen ein Bestimmen umfasst, ob die Datentypbeschränkung für das Softwareobjekt kompatibel mit der jeweiligen Datentypbeschränkung für jedes der anderen Softwareobjekte ist, die an dem Kandidatenobjektziel ausgebracht sind, und
Autorisieren der Bewegung des zu bewegenden Softwareobjekts, wenn bestimmt wird, dass die Beschränkung, die mit dem zu bewegenden Softwareobjekt assoziiert ist, kompatibel mit der Beschränkung ist, die mit den anderen Softwareobjekten assoziiert ist, die an dem Kandidatenobjektziel ausgebracht sind.

2. Verfahren nach Anspruch 1, wobei das zu bewegenden Softwareobjekt und/oder die anderen Softwareobjekte, die an dem Kandidatenobjektziel ausgebracht sind, eine Softwareanwendung oder eine virtuelle Maschine sind/ist.

3. Verfahren nach Anspruch 1, wobei das Rechensystem mehreren physische Rechenvorrichtungen umfasst und wobei ferner ein Objektziel der mehreren Objektziele eine virtuelle Maschine oder eine physische Rechenvorrichtung der mehreren physischen Rechenvorrichtungen ist.

4. Verfahren nach Anspruch 3, wobei, wenn das zu bewegende Objekt eine virtuelle Maschine ist, der Schritt des Autorisierens des Bewegens ferner ein Autorisieren der Bewegung der virtuellen Maschine und aller darauf ausgebrachten Objekte zu dem Kandidatenobjektziel umfasst.

5. Verfahren nach Anspruch 1, wobei der Schritt des Identifizierens des Kandidatenobjektziels auf Charakteristiken des zu bewegenden Softwareobjekts und Objektzielcharakteristiken basiert.

6. Verfahren nach Anspruch 1, ferner mit einem Bewegen des zu bewegenden Softwareobjekts zu dem Kandidatenobjektziel.

7. Verfahren nach Anspruch 6, ferner mit einem Aufzeichnen von Details des zu bewegenden Softwareobjekts, einem Aufzeichnen von Details des neuen Objektziels, zu dem das zu bewegende Softwareobjekt bewegt wurde, und einem Aufzeichnen von Details anderer Softwareobjekte an dem neuen Objektziel in einem Log.

8. Vorrichtung zum Bewegen eines aus mehreren Softwareobjekten, die an mehreren Objektzielen in einem Rechensystem ausgebracht sind, wobei die Vorrichtung umfasst:
einen Prozessor und
einen Speicher, wobei der Speicher umfasst:
Bewertungsengineinstruktionen, die ausgestaltet sind, wenn sie durch den Prozessor ausgeführt werden, eine Bewertungsengine zu implementieren, wobei die Bewertungsengine ausgestaltet ist:
eine Angabe zu erhalten, dass ein Softwareobjekt, das an einem Objektziel der mehreren Objektziele ausgebracht ist, zu einem anderen Objektziel der mehreren Objektziele zu bewegen ist, und
ein potentielles Objektziel zu identifizieren, zu dem das Softwareobjekt zu bewegen ist, und
Erfüllungsengineinstruktionen, die ausgestaltet sind, wenn sie durch den Prozessor ausgeführt werden, eine Erfüllungsengine zu implementieren, wobei die Erfüllungsengine ausgestaltet ist:
von einem Erfüllungsdatenspeicher Beschränkungsdaten zu erhalten, die mit dem Softwareobjekt assoziiert sind, wobei die Beschränkungsdaten Datentypbeschränkungsdaten umfassen,
von dem Erfüllungsdatenspeicher Beschränkungsdaten zu erhalten, die mit anderen Softwareobjekten assoziiert sind, die an dem potentiellen Objektziel ausgebracht sind, wobei die Beschränkungsdaten Datentypbeschränkungsdaten umfassen,
zu bestimmen, ob die Beschränkungsdaten, die mit dem Softwareobjekt assoziiert sind, mit den Beschränkungsdaten kompatibel sind, die mit den anderen Softwareobjekten assoziiert sind, einschließlich eines Bestimmens, ob die Datentypbeschränkungsdaten, die mit dem Softwareobjekt assoziiert sind, mit den Datentypbeschränkungsdaten kompatibel sind, die mit den anderen Softwareobjekten assoziiert sind, und
zu autorisieren, wenn dies bestimmt wird, dass das Softwareobjekt zu bewegen ist.

9. Vorrichtung nach Anspruch 8, wobei die Softwareobjekte eine Softwareanwendung und/oder eine virtuelle Maschine umfassen und wobei das potentielle Objektziel eine virtuelle Maschine oder eine physische Rechenvorrichtung ist.

10. Vorrichtung nach Anspruch 9, wobei die Beurteilungsengine ausgestaltet ist, das potentielle Objektziel zum Teil auf Basis von Charakteristiken des zu bewegenden Softwareobjekts und Charakteristiken der Objektziele der mehreren Objektziele zu identifizieren, wobei die Charakteristiken von einer Konfigurationsverwaltungsdatenbank, CMDB, erhalten werden.

11. Vorrichtung nach Anspruch 9, ferner mit einer Objektausbringungssteuereinheit, wobei die Beurteilungsengine ausgestaltet ist, das potentielle Objektziel direkt von der Objektausbringsteuereinheit zu identifizieren.

12. Vorrichtung nach Anspruch 9, ferner mit einem Erhalten der Beschränkungsdaten von einem Beschränkungsspeicher.

13. Vorrichtung nach Anspruch 9, ferner mit einem Datenlog, wobei die Beurteilungsengine ausgestaltet ist, in dem Datenlog Details des neuen Objektziels, zu dem das zu bewegende Softwareobjekt bewegt wurde, und Details anderer Softwareobjekte an dem neuen Objektziel zu speichern.

14. Dinghaftes, maschinenlesbares Medium, das maschinenlesbare Instruktionen speichert, die durch einen Prozessor ausführbar sind, um ein Verfahren des Bewegens eines von mehreren Softwareobjekten bereitzustellen, dass an einem von mehreren Objektzielen in einem Rechensystem ausgebracht ist, wobei das dinghafte maschinenlesbare Medium umfasst:
maschinenlesbare Instruktionen, die, wenn sie von dem Prozessor ausgeführt werden, ein ausgebrachtes Softwareobjekt zu identifizieren, das an ein neues Objektziel zu bewegen ist,
maschinenlesbare Instruktionen, die, wenn sie von dem Prozessor ausgeführt werden, ein Kandidatenobjektziel zu identifizieren, zu dem das zu bewegende Softwareobjekt bewegt werden kann,
maschinenlesbare Instruktionen, die, wenn sie von dem Prozessor ausgeführt werden, andere Softwareobjekte zu identifizieren, die an dem Kandidatenobjektziel ausgebracht sind,
maschinenlesbare Instruktionen, die, wenn sie von dem Prozessor ausgeführt werden, Beschränkungsdaten zu identifizieren, die mit dem zu bewegenden Softwareobjekt assoziiert sind, wobei die Beschränkungsdaten Datentypbeschränkungsdaten umfassen,
maschinenlesbare Instruktionen, die, wenn sie von dem Prozessor ausgeführt werden, Beschränkungsdaten zu identifizieren, die mit den anderen Softwareobjekten assoziiert ist, die an dem Kandidatenobjektziel ausgebracht sind, wobei die Beschränkungsdaten Datentypbeschränkungsdaten umfassen,
maschinenlesbare Instruktionen, die, wenn sie von dem Prozessor ausgeführt werden, bestimmen, ob die Beschränkungsdaten, die mit dem zu bewegenden Softwareobjekt assoziiert sind, kompatibel mit den Beschränkung sind, die mit den anderen Softwareobjekten assoziiert sind, die an dem Kandidatenobjektziel ausgebracht sind, einschließlich eines Bestimmens, ob die Datentypbeschränkungsdaten für das zu bewegende Softwareobjekt kompatibel mit den Datentypbeschränkungsdaten, die mit den anderen Softwareobjekte assoziiert sind, die an dem Kandidatenobjektziel ausgebracht sind, und
maschinenlesbare Instruktionen, die, wenn sie von dem Prozessor ausgeführt werden, die Bewegung des zu bewegenden Softwareobjekts zu dem Kandidatenobjektziel autorisieren, wenn bestimmt wird, dass die Beschränkungsdaten, die mit dem zu bewegenden Softwareobjekt assoziiert sind, kompatibel mit den Beschränkungsdaten sind, die mit den anderen Softwareobjekten assoziiert sind, die an dem Kandidatenobjektziel ausgebracht sind.

15. Dinghaftes, maschinenlesbares Medium nach Anspruch 14, mit maschinenlesbaren Instruktionen, das wenn sie durch den Prozessor ausgeführt werden, das Kandidatenobjektziel auf Basis von Charakteristiken des zu bewegenden Softwareobjekts und Objektzielcharakteristiken identifizieren.

## Revendications

1. Procédé de déplacement l'un d'une pluralité d'objets logiciels déployés parmi une pluralité de destinations d'objets dans un système informatique,
le procédé comprenant les étapes consistant à :
identifier un objet logiciel déployé à déplacer vers une nouvelle destination d'objet ;
identifier une destination d'objet candidate ;
identifier d'autres objets logiciels déployés sur la destination d'objet candidate ;
identifier une contrainte associée à l'objet logiciel à déplacer, l'identification de la contrainte associée à l'objet logiciel à déplacer comportant l'identification d'une contrainte de type de données pour l'objet logiciel ;
identifier une contrainte associée aux autres objets logiciels déployés sur la destination d'objet candidate, l'identification de la contrainte associée aux autres objets logiciels déployés sur la destination d'objet candidate comportant l'identification d'une contrainte de type de données respective pour chacun des autres objets logiciels déployés sur la destination d'objet candidate ;
déterminer si la contrainte associée à l'objet logiciel à déplacer est compatible avec la contrainte associée aux autres objets logiciels déployés sur la destination d'objet candidate, la détermination comportant le fait de déterminer si la contrainte de type de données pour l'objet logiciel est compatible avec la contrainte de type de données respective pour chacun des autres objets logiciels déployés sur la destination d'objet candidate ; et
autoriser le déplacement de l'objet logiciel à déplacer lorsqu'il est déterminé que la contrainte associée à l'objet logiciel à déplacer est compatible avec la contrainte associée aux autres objets logiciels déployés sur la destination d'objet candidate.

2. Procédé de la revendication 1, dans lequel au moins l'un de l'objet logiciel à déplacer et des autres objets logiciels déployés sur la destination d'objet candidate est l'une d'une application logicielle ou d'une machine virtuelle.

3. Procédé de la revendication 1, dans lequel le système informatique comprend une pluralité de dispositifs informatiques physiques, et en outre dans lequel une destination d'objet de la pluralité de destinations d'objets est l'un d'une machine virtuelle et d'un dispositif informatique physique de la pluralité de dispositifs informatiques physiques.

4. Procédé de la revendication 3, dans lequel, lorsque l'objet logiciel à déplacer est une machine virtuelle, l'étape d'autorisation du déplacement comprend en outre l'autorisation du déplacement de la machine virtuelle et de tous les objets qui sont déployés sur celle-ci vers la destination d'objet candidate.

5. Procédé de la revendication 1, dans lequel l'étape d'identification de la destination d'objet candidate est basée sur des caractéristiques de l'objet logiciel à déplacer et des caractéristiques de destination d'objet.

6. Procédé de la revendication 1, comprenant en outre le déplacement de l'objet logiciel à déplacer vers la destination d'objet candidate.

7. Procédé de la revendication 6, comprenant en outre les étapes consistant à enregistrer des détails de l'objet logiciel à déplacer, à enregistrer des détails de la nouvelle destination d'objet vers laquelle l'objet logiciel à déplacer a été déplacé, et à enregistrer des détails des autres objets logiciels sur la nouvelle destination d'objet, dans un journal.

8. Appareil de déplacement de l'un d'une pluralité d'objets logiciels déployés parmi une pluralité de destinations d'objets dans un système informatique, l'appareil comprenant :
un processeur ; et
une mémoire, où la mémoire comprend :
des instructions de moteur d'évaluation configurées pour, lorsqu'elles sont traitées par le processeur, implémenter un moteur d'évaluation, le moteur d'évaluation étant configuré pour :
obtenir une indication selon laquelle un objet logiciel déployé sur une destination d'objet de la pluralité de destinations d'objets doit être déplacé vers une destination d'objet différente de la pluralité de destinations d'objets ; et
identifier une destination d'objet potentielle pour l'objet logiciel à déplacer ; et
des instructions de moteur de conformité configurées pour, lorsqu'elles sont traitées par le processeur, implémenter un moteur de conformité, le moteur de conformité étant configuré pour :
obtenir, à partir d'un magasin de données de conformité, des données de contrainte associées à l'objet logiciel, les données de contrainte comportant des données de contrainte de type de données ;
obtenir, à partir du magasin de données de conformité, des données de contrainte associées à d'autres objets logiciels déployés sur la destination d'objet potentielle, les données de contrainte comportant des données de contrainte de type de données ;
déterminer si les données de contrainte associées à l'objet logiciel sont compatibles avec les données de contrainte associées aux autres objets logiciels, comportant le fait de déterminer si les données de contrainte de type de données associées à l'objet logiciel sont compatibles avec les données de contrainte de type de données associées aux autres objets logiciels ; et
autoriser, si cela est déterminé, le déplacement de l'objet logiciel.

9. Appareil de la revendication 8, dans lequel les objets logiciels comportent au moins l'une d'une application logicielle et d'une machine virtuelle, et dans lequel la destination d'objet potentielle est l'un d'une machine virtuelle et d'un dispositif informatique physique.

10. Appareil de la revendication 9, dans lequel le moteur d'évaluation est configuré pour identifier la destination d'objet potentielle sur la base en partie des caractéristiques de l'objet logiciel à déplacer et des caractéristiques de destination d'objet de la pluralité de destinations d'objets, les caractéristiques étant obtenues à partir d'une base de données de gestion de configuration, CMDB.

11. Appareil de la revendication 9, comprenant en outre un dispositif de commande de déploiement d'objet, et dans lequel le moteur d'évaluation est configuré pour identifier la destination d'objet potentielle directement à partir du dispositif de commande de déploiement d'objet.

12. Appareil de la revendication 9, comprenant en outre l'obtention des données de contrainte à partir d'un magasin de données de contraintes.

13. Appareil de la revendication 9, comprenant en outre un journal de données, le moteur d'évaluation étant configuré pour stocker dans le journal de données les détails de la nouvelle destination d'objet vers laquelle l'objet logiciel à déplacer a été déplacé et les détails d'autres objets logiciels sur la nouvelle destination d'objet.

14. Support tangible lisible par machine qui stocke des instructions lisibles par machine pouvant être exécutées par un processeur afin de fournir un procédé de déplacement de l'un d'une pluralité d'objets logiciels déployés parmi une pluralité de destinations d'objets dans un système informatique, le support tangible lisible par machine comprenant :
des instructions lisibles par machine qui, lorsqu'elles sont exécutées par le processeur, identifient un objet logiciel déployé sur une destination d'objet à déplacer vers une nouvelle destination d'objet ;
des instructions lisibles par machine qui, lorsqu'elles sont exécutées par le processeur, identifient une destination d'objet candidate vers laquelle l'objet logiciel à déplacer peut être déplacé ;
des instructions lisibles par machine qui, lorsqu'elles sont exécutées par le processeur, identifient des objets logiciels actuellement déployés sur la destination d'objet candidate ;
des instructions lisibles par machine qui, lorsqu'elles sont exécutées par le processeur, identifient des données de contrainte associées à l'objet logiciel à déplacer, les données de contrainte comportant des données de contrainte de type de données ;
des instructions lisibles par machine qui, lorsqu'elles sont exécutées par le processeur, identifient des données de contrainte associées à des objets logiciels déployés sur la destination d'objet candidate, les données de contrainte comportant des données de contrainte de type de données ;
des instructions lisibles par machine qui, lorsqu'elles sont exécutées par le processeur, déterminent si les données de contrainte associées à l'objet logiciel à déplacer sont compatibles avec les données de contrainte associées aux objets logiciels déployés sur la destination d'objet candidate, comportant le fait de déterminer si les données de contrainte de type de données associées à l'objet logiciel à déplacer sont compatibles avec les données de contrainte de type de données associées aux objets logiciels déployés sur la destination d'objet candidate ; et
des instructions lisibles par machine qui, lorsqu'elles sont exécutées par le processeur, autorisent le déplacement de l'objet logiciel à déplacer vers la destination d'objet candidate où il est déterminé que les données de contrainte associées à l'objet logiciel à déplacer sont compatibles avec les données de contrainte associées aux objets logiciels déployés sur la destination d'objet candidate.

15. Support tangible lisible par machine, de la revendication 14, comprenant des instructions lisibles par machine qui, lorsqu'elles sont exécutées par le processeur, identifient la destination d'objet candidate sur la base des caractéristiques de l'objet logiciel à déplacer et des caractéristiques de destination d'objet.
